# EUROPÄISCHE PATENTSCHRIFT

(11) **EP 1 544 587 B1**
(45) Veröffentlichungstag und Bekanntmachung des Hinweises auf die Patenterteilung: **07.05.2008**
(21) Anmeldenummer: 04029650.1
(22) Anmeldetag: 15.12.2004
(51) Int. Cl.: G01J 1/00, B64G 1/36

(54) **Sonnensensor**
Sun sensor
Senseur solaire

(30) Priorität: 17.12.2003 DE 10359184
(43) Veröffentlichungstag der Anmeldung: 22.06.2005
(73) Patentinhaber: Hella KGaA Hueck & Co., 59552 Lippstadt (DE)
(72) Erfinder: Kühnau, Uwe, 59227 Ahlen (DE); Vogt, Markus, 59557 Lippstadt (DE)

(56) Entgegenhaltungen:
- DE-A1- 3 821 743
- US-A- 4 962 311
- US-A- 5 416 318

## Beschreibung

Die Erfindung befasst sich mit einem Sensor zur Erfassung der Position der Sonne in Bezug auf ein Kraftfahrzeug mit einer Lichtleitvorrichtung mit mindestens einem Photodetektor.

Aus der DE 689 100 25 T2 ist ein Photodetektorsystem mit beeinflussbarer positionsabhängiger Empfindlichkeit bekannt. Dieses Photodetektorsystem weist einen Photodetektor auf, der das Licht erfasst, das durch einen Lichtdiffusor auf ihn auftrifft. Der Lichtdiffusor ist halbkugelförmig ausgebildet. Oberhalb des Lichtdiffusors befindet sich ein Lichtmodulator. Durch diese Anordnung kann die Position der Sonne erfasst werden. In Abhängigkeit dieser Position wird ein Steuersignal an ein Klimasystem für ein Kraftfahrzeug, in dem sich das Photodetektorsystem befindet, geleitet. Dadurch ist es möglich, dass in den Fällen, in denen die Sonne durch die Scheiben des Kraftfahrzeugs fällt und somit eine hohe gefühlte Temperatur für die Fahrzeuginsassen erzeugt wird, das Klimasystem dementsprechend geregelt wird. Nachteilig an dem bekannten Photodetektorsystem ist, dass es aufgrund seines halbkugelförmigen Lichtdiffusors nicht an der Windschutzscheibe des Kraftfahrzeugs angeordnet werden kann. Darüber hinaus bringt diese Ausgestaltung auch designerische Nachteile mit sich.

Darüber hinauas ist aus der US 5,416,318 ein Sonnensensor mit einem Lichtleiter bekannt, bei dem die Sonnenstrahlen durch Totalreflexion auf den Photodetektor gerichtet werden.

Aufgabe der Erfindung ist es, einen Sensor zur Erfassung der Position der Sonne zur Verfügung zu stellen, der direkt an der Windschutzscheibe angebracht werden kann.

Die Aufgabe wird durch einen Sensor mit den Merkmalen des Patentanspruchs 1 gelöst. Eine zuverlässige Erfassung der Position der Sonne in Bezug auf das Kraftfahrzeug - und somit auch auf den Fahrer beziehungsweise den Beifahrer - wird dadurch erreicht, dass als Lichtleitvorrichtung ein trichterförmiger Lichtleiter verwendet wird, der die von der Sonne auf die Eintrittsfläche fallenden Strahlen entweder direkt oder durch Totalreflexion an den Seitenflächen des Lichtleiters auf den mindestens einen Photodetektor leitet. Dabei ist die Eintrittsfläche der Lichtleitvorrichtung im Wesentlichen plan ausgebildet ist. Dadurch ist ein direktes Anbringen des Sensors an der ebenfalls im Wesentlichen auf jeweils kleinen Teilbereichen plan ausgebildeten Windschutzscheibe ästhetisch noch viel ansprechender möglich.

Da die gefühlte Temperatur von der Richtung und Intensität der einfallenden Sonnenstrahlung abhängig ist und die Strahlungsbelastung für die Fahrzeuginsassen in der Regel bei einem Einfallswinkel von 45° in das Fahrzeug das Maximum erreicht, der Sensor jedoch an der Innenseite der Windschutzscheibe angebracht ist, wird für die Beschreibung der Geometrie des Sensors in dieser Anmeldung von der Ebene der Windschutzscheibe ausgegangen. Unter einem Querschnitt der Lichtleitvorrichtung wird ein Schnitt im Wesentlichen senkrecht zur Windschutzscheibe und parallel zur Oberkante der Winschutzscheibe verstanden. Unter einem Längsschnitt der Lichtleitvorrichtung wird ein Schnitt senkrecht zur Windschutzscheibe und senkrecht zum Querschnitt verstanden.

Eine weitere vorteilhafte Weiterbildung der Erfindung sieht vor, dass Querschnitte der Lichtleitvorrichtung in einem sonnennahen ersten Bereich trapezförmig und in einem sonnenfernen zweiten schmaleren Bereich im Wesentlichen rechteckig sind. Im zweiten Bereich erfolgt die Totalreflexion an den Seitenflächen. Durch eine Neigung der Seitenflächen in diesem zweiten Bereich ist es möglich, den Bereich des Maximums festzulegen. Beispielsweise können die Seitenflächen um ±15° gegen den rechten Winkel geneigt sein. Die Höhe der Seitenflächen bestimmt dabei die Weite des Sichtfelds. Je höher die Wände sind, desto weniger "sieht" der Sensor in den Halbbereich, der seiner Seite zugeordnet ist. Darüber hinaus kann über die Breite des zweiten Bereichs die Empfangsintensität eingestellt werden.

Eine weitere vorteilhafte Weiterbildung der Erfindung sieht vor, dass die Lichtleitvorrichtung in ihrem sonnenfernen Bereich eine Mittelausnehmung aufweist. Die Seitenflächen der Mittelausnehmung können parallel zur Mittellängsachse des Lichtleiters sein oder auch einen Winkel mit dieser einschließen, beispielsweise von ±15°. Durch die Neigung dieser Seitenflächen lässt sich der Bereich des Maximums und die Empfangsweite in dem der anderen Seite zugeordneten Halbfeld einstellen. Die Höhe der Mittelausnehmung bestimmt die Empfindlichkeitsverteilung zwischen den beiden Halbfeldern. Die Neigung der Außenfläche der Lichtleitvorrichtung bestimmt die Weite des Sichtfeldes in dem dieser Seite zugeordneten Halbfeld. Je flacher diese Seitenfläche ist, desto weiter reicht das Sichtfeld zu betragsmäßig größeren Winkeln hin.

Besonders bevorzugt sind die Seitenflächen in jedem Querschnitt symmetrisch zur Mittellängsachse der Lichtleitvorrichtung angeordnet. Dadurch wird eine symmetrische Erfassung der Position der Sonne gewährleistet.

Eine weitere vorteilhafte Weiterbildung der Erfindung sieht vor, dass die Photodetektoren im Querschnitt nebeneinander angeordnet sind. Mit einem solchen Dualsensor kann eine unterschiedliche Strahlungsbelastung des Fahrers und des Beifahrers durch die Sonne gut detektiert werden und das Klimasystem entsprechend unterschiedlich für den Fahrer und den Beifahrer geregelt werden.

Eine weitere vorteilhafte Weiterbildung der Erfindung sieht vor, dass die Längsschnitte der Lichtleitvorrichtung im Wesentlichen trapezförmig ausgebildet sind. Dadurch wird ein weiter Empfangsbereich hinsichtlich des Einfallswinkels erreicht.

Eine weitere vorteilhafte Weiterbildung der Erfindung sieht vor, dass die Längsschnitte der Lichtleitvorrichtung in dem sonnennahen ersten Bereich trapezförmig und in dem sonnenfernen zweiten Bereich im Wesentlichen rechteckig sind. Dadurch wird eine gute Bündelung des einfallenden Lichts durch die Lichtleitvorrichtung auf den/die Photodetektor(en) erzielt.

Eine weitere vorteilhafte Weiterbildung der Erfindung sieht vor, dass die Austrittsfläche nicht plan ist. Dadurch kann das durch die Lichtleitvorrichtung geleitete Licht der Sonne optimal auf den/die Photodetektor(en) gebracht werden.

Eine weitere vorteilhafte Weiterbildung der Erfindung sieht vor, dass der Sensor mit einem regen- und/oder lichtdetektierenden Sensor in einem einzigen Kombinationssensor räumlich integriert ist. Dadurch kann beispielsweise ein Regenlichtsensor, der an der Windschutzscheibe angebracht wird, mit dem erfindungsgemäßen Sensor räumlich sehr kompakt zusammengefasst werden. Darüber hinaus müssen nicht zwei unterschiedliche Sensoren montiert werden und es entfallen auch zusätzliche Verkabelungen.

Eine weitere vorteilhafte Weiterbildung der Erfindung sieht vor, dass die Seitenflächen zumindest im zweiten Bereich verspiegelt sind. Dadurch wird gewährleistet, dass alle direkte Strahlen von der Sonne, die in den Lichtleiter eintreten, auch wieder durch die Austrittsfläche austritt.

Vorteilhafte Ausgestaltungen der Erfindung werden anhand der in den Figuren dargestellten Ausführungsbeispiele erläutert. Hierbei zeigen:
- Fig. 1: die räumliche Darstellung der beiden interessierenden Winkel zur Erfassung der Position der Sonne bezogen auf ein Kraftfahrzeug;
- Fig. 2: eine Empfangscharakteristik eines ersten Ausführungsbeispiels eines erfindungsgemäßen Sensors in einem Querschnitt;
- Fig. 3: die Empfangscharakteristik des Sensors aus Fig. 2 in einem Längsschnitt;
- Fig. 4: der leicht vergrößerte Sensor wie in Fig. 3 ohne einfallende Strahlen;
- Fig. 5: ein zweites Ausführungsbeispiel eines erfindungsgemäßen Sensors mit Empfangscharakteristik in einem Schnitt entlang derselben Ebene wie in Fig. 2;
- Fig. 6: die Empfangscharakteristik des Sensors aus Fig. 5 in einem Schnitt entlang derselben Ebene wie in Fig. 3;
- Fig. 7: die vergrößerte Darstellung des Sensors aus Fig. 6 ohne Empfangscharakteristik und
- Fig. 8: eine räumliche Darstellung eines erfindungsgemäßen Sensors nach dem ersten Ausführungsbeispiel der Figuren 2 bis 4.

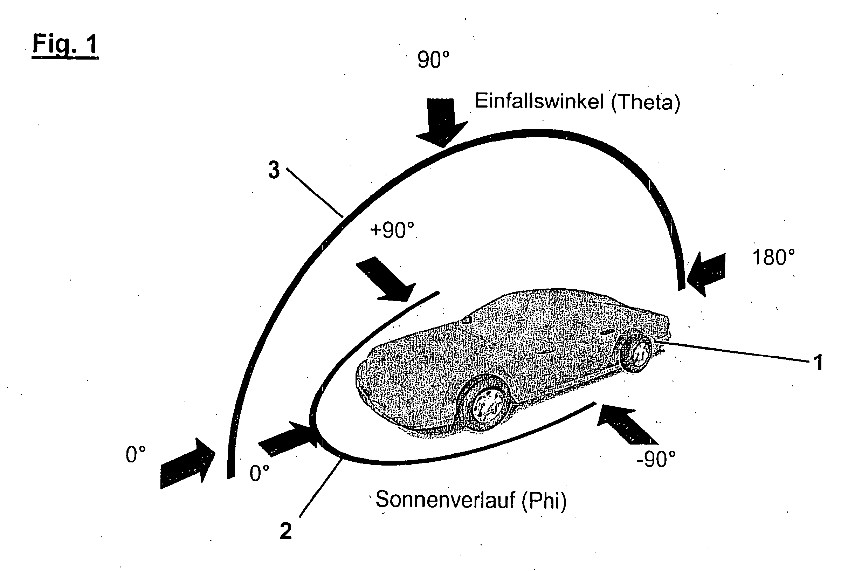

In Fig. 1 sind ein Fahrzeug 1 sowie die beiden Skalen dargestellt, die zur eindeutigen Festlegung des Standes der Sonne bezüglich des Fahrzeugs 1 verwendet werden. Zum einen wird der Sonnenverlauf 2 durch eine Skala in azimutaler Richtung bezüglich des Fahrzeugs 1 festgelegt. Diese Skala läuft von einem Winkel ϕ = -90° bis zu einem Winkel ϕ = +90°. Um die Stellung der Sonne über dem Fahrzeughorizont festzulegen, wird eine zweite Skala verwendet, die die Höhe der Sonne über dem Fahrzeughorizont beschreibt. Diese Skala wird als Einfallswinkel 3 bezeichnet, mit θ = 0° im Fahrzeughorizont und θ = 90° im Fahrzeugzenit.

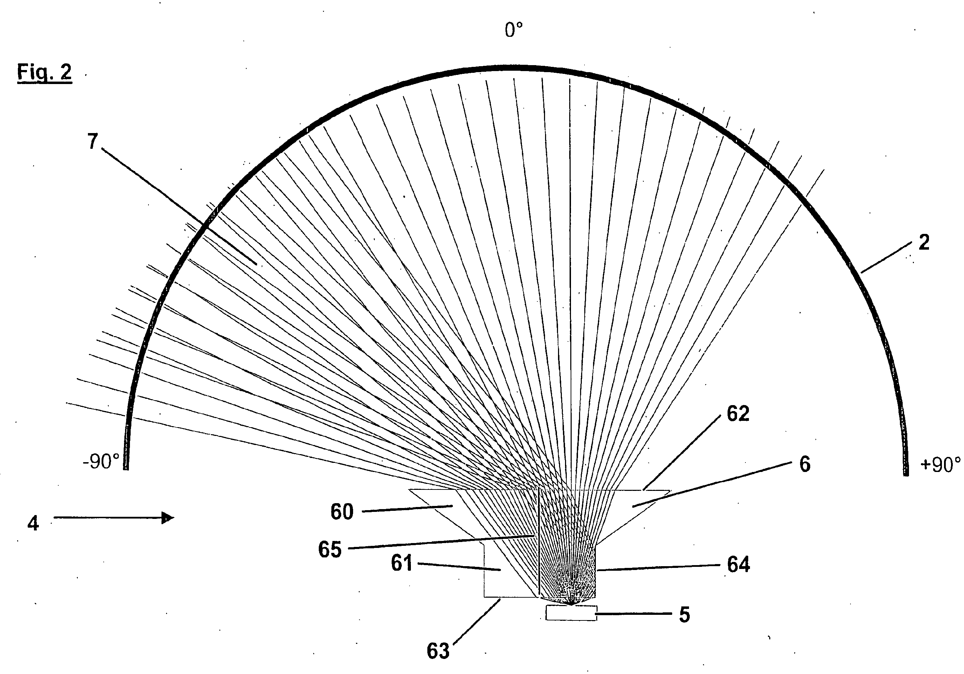

In Fig. 2 ist die Empfangscharakteristik eines Photodetektors 5 in Form einer Photodiode dargestellt, die sich hinsichtlich eines Querschnitts ergibt. Eine erste Ausführungsform eines erfindungsgemäßen Sensors 4 weist neben der rechten Photodiode 5 auch noch eine linke Photodiode (nicht gezeigt) auf, die neben der rechten Photodiode 5 angeordnet ist. Es handelt sich somit um einen Dualsensor, der dazu geeignet ist, die unter Umständen unterschiedliche einfallende Strahlungsleistung der Sonne beim Fahrer und Beifahrer zu detektieren. Die beiden Photodioden 5 sind in Strahlrichtung hinter einer Lichtleitvorrichtung 6 angeordnet.

Die Lichtleitvorrichtung 6 ist trichterförmig aufgebaut. Sie weist einen sonnennahen ersten trapezförmigen Bereich 60 auf, an dem sich ein sonnenferner zweiter schmaler Bereich 61 anschließt, der im dargestellten Fall einen rechteckigen Querschnitt aufweist. Die Lichtleitvorrichtung 6 ist als Lichtleiter ausgebildet und aus einem Material, welches Licht gut leitet. Hierbei ist jeder Kunststoff verwendbar, der sich gut verspritzen lässt und im sichtbaren und/oder infraroten Bereich optisch transparent ist.

Die Strahlen 7 fallen durch eine plane Eintrittsfläche 62 in die Lichtleitvorrichtung 6 ein. An der Eintrittsfläche 62 findet eine Brechung statt. Die einfallenden Strahlen 7 werden durch die Lichtleitvorrichtung 6 zur Austrittsfläche 63 geleitet. Die Strahlen treffen unter einem so kleinen Winkel auf die Seitenflächen 64, dass sie beim Übergang vom optisch dichteren in das optisch dünnere Medium total reflektiert werden. Die Seitenflächen 64 können zur Totalreflexion auch mit einer Spiegelschicht versehen sein.

Beim Austritt der Strahlen 7 durch die Austrittsfläche 63 findet wiederum eine Brechung statt, so dass die dargestellten Lichtstrahlen auf die rechte Photodiode 5 fallen und von dieser registriert werden.

Durch die geometrische Ausgestaltung der Seitenfläche 64 in den Querschnitten wird die Empfindlichkeit des Sensors 4 bezüglich der Stellung der Sonne in der Richtung des Sonnenverlaufs 2 eingestellt. Die Neigung der Seitenfläche 64 im sonnenfernen zweiten Bereich 61 bestimmt im Wesentlichen die Weite des Sichtfelds in dem auf dieser Seite liegenden Halbbereich. Dies bedeutet im konkreten Fall, dass bei einem steilen Verlauf der Seitenfläche 64 im sonnenfernen zweiten Bereich 61 der Empfangsbereich der rechten Photodiode 5 von der rechten Seitenfläche 64 zu kleineren Winkeln, das bedeutet gegen ϕ = 0 hin beschränkt wird und in betragsmäßig größeren Winkelbereichen, das heißt zu Winkeln ϕ = -90° durch die symmetrisch angeordnete linke Seitenfläche 64 unterdrückt wird. Dies gilt entsprechend für die linke Photodiode analog nur mit umgekehrten Vorzeichen.

Die Höhe der Seitenfläche 64 im zweiten sonnenfernen Bereich 61 trägt ebenfalls zur Bestimmung der Weite des Sichtfeldes bezüglich des Halbfeldes bei, auf deren Seite sie sich befindet. Dies bedeutet, dass die linke Seitenfläche 64 des zweiten sonnenfernen Bereichs 61 ebenfalls für die Beschränkung des Sichtfelds im negativen Bereich des Winkels ϕ zuständig ist.

Die Breite des zweiten sonnenfernen Bereichs 61 bestimmt darüber hinaus die Empfangsintensität des Sensors 4.

Die Neigung der Seitenfläche 64 im zweiten sonnenfernen Bereich 61 gegenüber der Mittellängsachse 65 der Lichtleitvorrichtung 6 bestimmt den Bereich des Maximums. Ist die rechte Seitenfläche 64 in Richtung negativer Winkel ϕ gekippt, so verschiebt sich das Maximum zu größeren negativen Winkeln ϕ des Sonnenverlaufs 2, dies bedeutet über ϕ = -45° hinaus Richtung ϕ = -90°. Umgekehrt ist es, wenn die Neigung dieser Seitenfläche 64 zu einem positiven Winkel ϕ vorgenommen wird, dann verschiebt sich das Maximum zu kleineren negativen Winkeln ϕ des Sonnenverlaufs 2. Diese Ausführungen gelten hinsichtlich der Seitenfläche, die auf der linken Seite ausgebildet ist, analog nur mit umgekehrten Vorzeichen.

Die rechte Photodiode 5 "sieht" somit im Wesentlichen nur den linken Bereich des Sonnenverlaufs 2, das heißt Winkel von ϕ = 0° bis ϕ = -90°. Dagegen "sieht" die linke Photodiode (nicht gezeigt) im Wesentlichen nur den rechten Verlauf des Sonnenverlaufs 2, das heißt Winkel von ϕ = 0° bis ϕ = +90°.

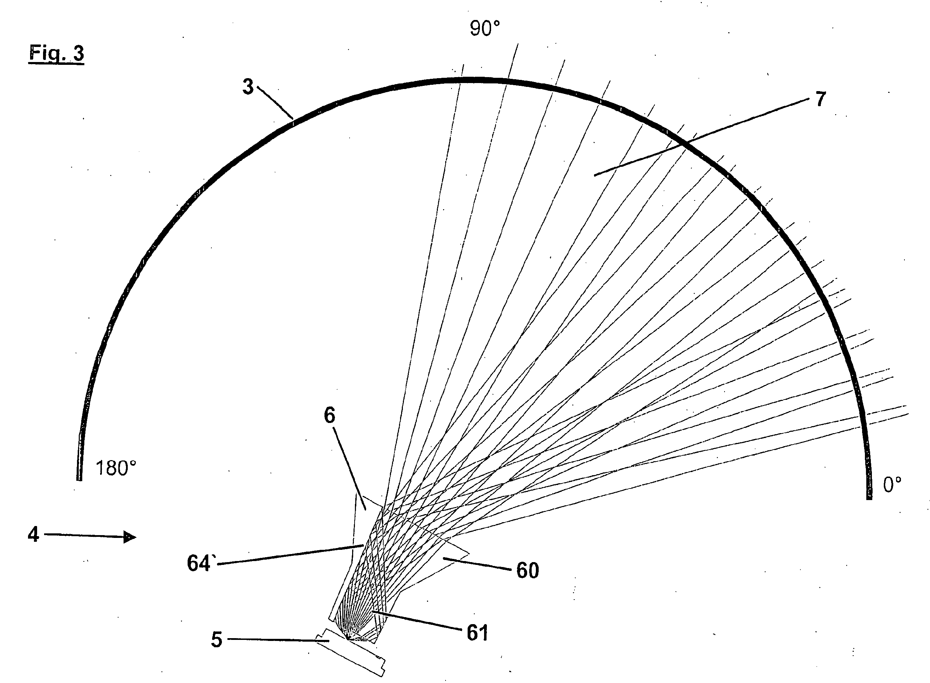

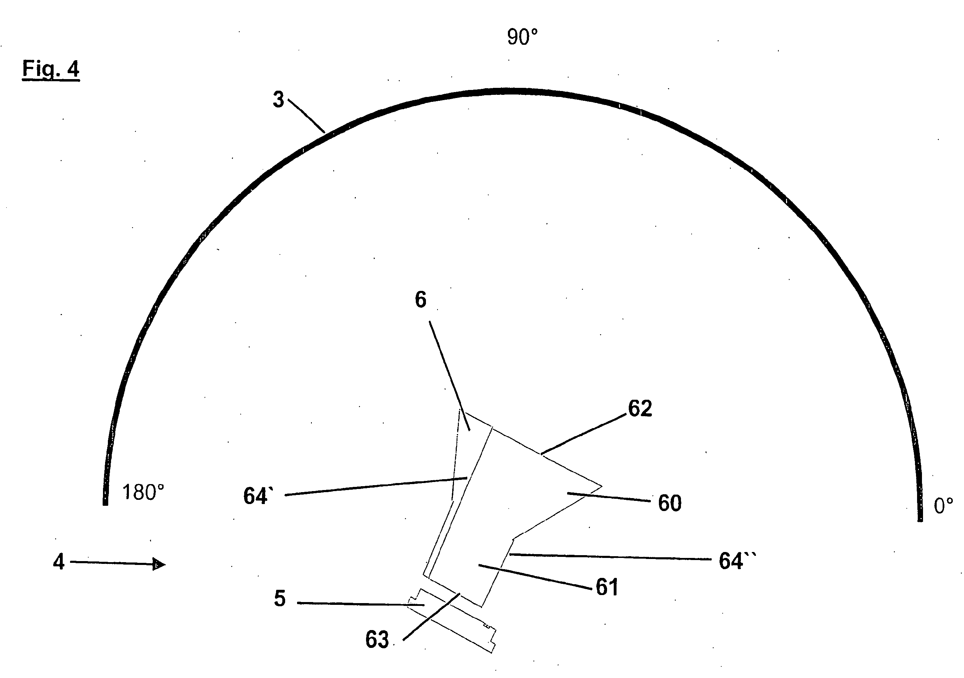

In Fig. 3 ist eine Empfangscharakteristik der Photodioden 5 bezüglich des Einfallswinkels 3 dargestellt. Es handelt sich um einen Länggschnitt durch den Sensor 4. Eine Darstellung des Sensors 4 ohne die Strahlen 7 ist in leicht vergrößerter Form in Fig. 4 gegeben. Die Lichtleitvorrichtung 6 weist auch hier einen sonnennahen ersten Bereich 60 auf, der trapezförmig ausgebildet ist. Daran schließt sich ein zweiter sonnenferner Bereich 61 an, der im Wesentlichen einen rechteckigen Querschnitt aufweist. Die in der Figur links liegende obere Seitenfläche 64' ist dabei als Gerade ausgebildet. Für den trapezförmigen ersten sonnennahen Teil 60 ergibt sich ein Trapez mit einem rechten Winkel.

Beim Einfall des Lichts 7 findet an der planen Eintrittsfläche 62 eine Brechung statt, wie dies oben schon zu Fig. 2 ausgeführt wurde. Dasselbe gilt auch bei dem Austritt der Strahlen 7 aus der Lichtleitvorrichtung 6 durch die Austrittsfläche 63. Damit werden die Strahlen 7 auf die Photodiode 5 geleitet.

Die obere und untere Seitenfläche 64', 64" bestimmen in ihrem Zusammenspiel die Weite des Empfangsbereichs. Dieses Zusammenspiel ist äußerst kompliziert und wird durch ein iteratives Verfahren bestimmt. Als Ergebnis lässt sich das Empfangsmaximum für einen Einfallswinkel 3 entsprechend den Anforderungen (im Wesentlichen 45°) einstellen. Bei einem Dualsensor ist dies auch gleichzeitig für einen Winkel des Sonnenverlaufs 2 von +45° für den Beifahrer und für einen Winkel des Sonnenverlaufs 2 von -45° für den Fahrer möglich. Darüber hinaus wird die Empfangscharakteristik noch stark vom verwendeten Material der Lichtleitvorrichtung 6 und der Wandstärke beeinflusst.

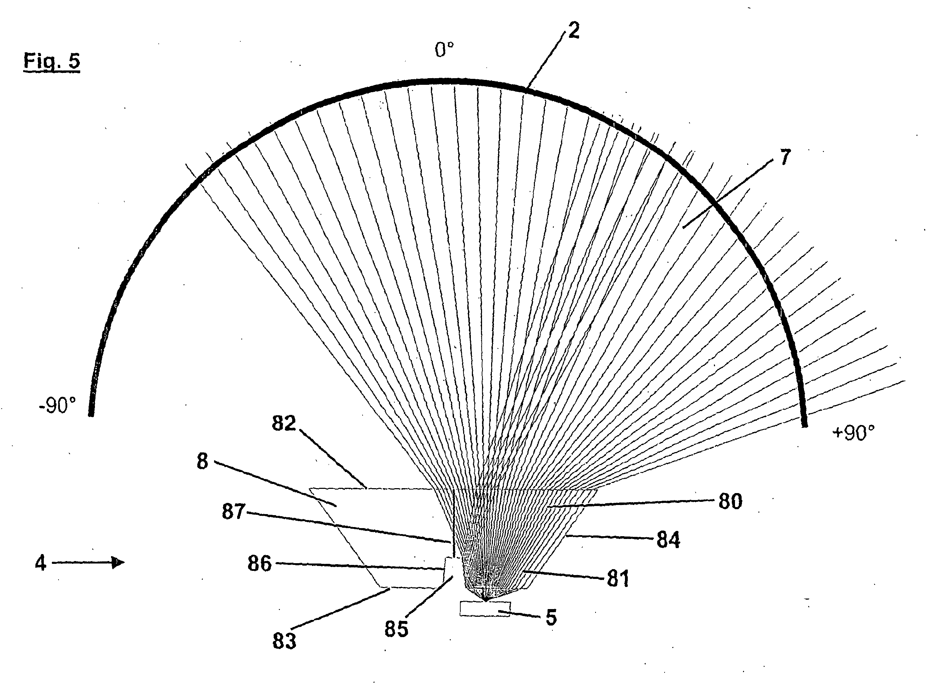

In Fig. 5 ist ein Schnitt durch eine zweite erfindungsgemäße Lichtleitvorrichtung 8 mit Empfangscharakteristik für die rechte Photodiode 5 analog zu dem in Fig. 2 dargestellten Schnitt dargestellt. Im Folgenden wird spezifisch auf die Unterschiede zum ersten Ausführungsbeispiel der Lichtleitvorrichtung 6 aus Fig. 2 eingegangen.

Die Funktionsweisen der Eintrittsfläche 82, der für die interessierenden Strahlen 7 totalreflektierenden Seitenflächen 86 sowie der Austrittsfläche 83 und der sich in Strahlrichtung dahinter befindlichen Photodioden 5 ist prinzipiell mit den in Fig. 2 beschriebenen gleich.

Die Lichtleitvorrichtung 8 hat auch einen ersten sonnennahen Bereich 80 und einen zweiten sonnenfernen Bereich 81. Der erste sonnennahe Bereich 80 ist, wie der des ersten Ausführungsbeispiels aus Fig. 2, im Querschnitt trapezförmig ausgestaltet. Der zweite sonnenferne Bereich 81 ist jedoch nicht im Wesentlichen rechteckig ausgestaltet, sondern setzt an seiner Seitenfläche 84 die Trapezform des ersten sonnennahen Abschnitts 80 fort. Dagegen ist an der zweiten Lichtleitvorrichtung 8 eine Mittelausnehmung 85 ausgebildet. Damit wird eine "Kanalisierung" der einfallenden Strahlen 7 zu den beiden Photodioden 5 (nur die rechte ist hier dargestellt) erzielt. Im Gegensatz zum ersten Ausführungsbeispiel der Fig. 2 "sieht" die rechte Diode 5 hier allerdings den rechten Bereich, dies bedeutet im Sonnenverlauf 2 die positiven Winkel von ϕ = 0° bis ϕ = +90°. Dies ist genau umgekehrt zu dem in Fig. 2 dargestellten ersten Ausführungsbeispiel. Dabei wird durch die Höhe der Mittelausnehmung 85 die Empfindlichkeitsverteilung zwischen dem positiven und negativen Bereich des Sonnenverlaufs 2 bestimmt. Je höher die Mittelausnehmung 85 ist, desto weniger "sieht" die rechte Photodiode 5 im negativen Bereich des Sonnenverlaufs 2 aber umso mehr im positiven Bereich des Sonnenverlaufs 2.

Durch die Neigung der Seitenfläche 86 der Mittelausnehmung 85 gegenüber der Mittellängsachse 87 des Sensors 4 werden der Bereich des Maximums im positiven Winkelbereich des Sonnenverlaufs 2 und die Empfangsweite im negativen Sichtfeld des Sonnenverlaufs 2 festgelegt. Dies gilt für die der rechten Photodiode 5 zugeordnete rechte Seitenfläche 86. Analoges, jedoch mit vertauschten Vorzeichen, gilt auch für die linke Seitenfläche 86 der Mittelausnehmung 85 und der ihr zugeordneten linken Photodiode (nicht gezeigt).

Bei einer Neigung der rechten Seitenfläche 86 der Mittelausnehmung 85 zu negativen Winkeln ϕ hin wird das Maximum der Empfangscharakteristik zu Winkeln ϕ < 45° verschoben. Dafür erhält man ein weiteres Sichtfeld im negativen Winkelbereich des Sonnenverlaufs 2 gegen ϕ = -90°. Ist dagegen die Seitenfläche 86 der Mittelausnehmung 85 gegen positive Winkel ϕ des Sonnenverlaufs 2 geneigt, erhält man ein Maximum der Empfangscharakteristik bei Winkeln ϕ > 45° und ein engeres Sichtfeld im negativen Winkelbereich des Sonnenverlaufs 2 gegen ϕ = 0 hin.

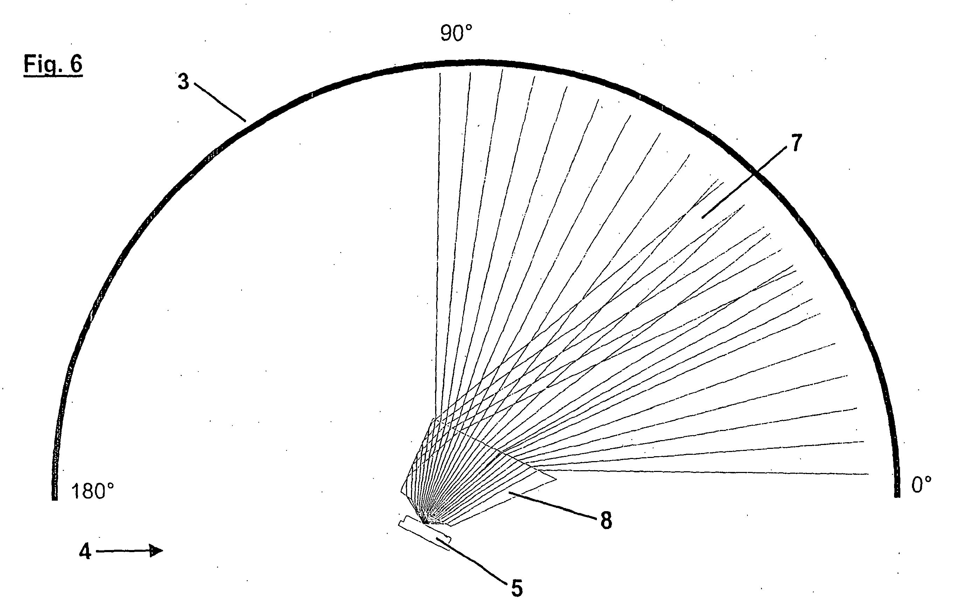

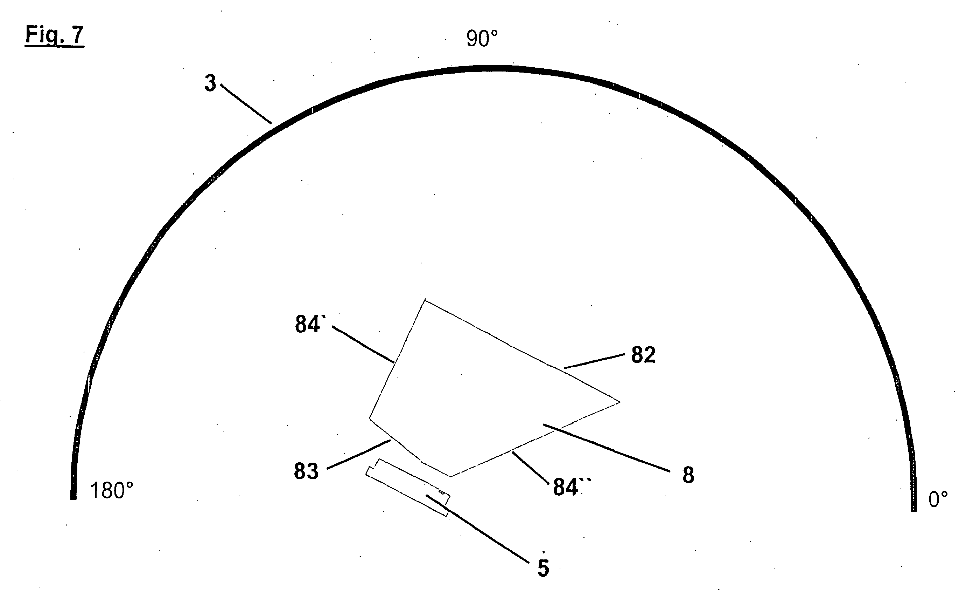

Die Figuren 6 und 7 entsprechen für das zweite Ausführungsbeispiel der Lichtleitvorrichtung 8 im Wesentlichen dem in den Figuren 3 und 4 dargestellten ersten Ausführungsbeispiel der Lichtleitvorrichtung 6. Im Folgenden werden deshalb überwiegend Ausführungen bezüglich der Unterschiede zu dem ersten Ausführungsbeispiel gemacht.

Die obere Seitenfläche 84' ist im dargestellten Ausführungsbeispiel im Wesentlichen senkrecht zur Eintrittsfläche 82 angeordnet und gerade ausgebildet. Dies muss jedoch nicht zwingend so sein und hängt stark davon ab, wie die Empfangscharakteristik des Sensors 4 ausgelegt sein soll. Die untere Seitenfläche 84" ist ebenfalls jeweils im Querschnitt gerade ausgebildet, weist jedoch einen spitzen Winkel zur Eintrittsfläche 82 auf. Dadurch ergibt sich im Wesentlichen ein trapezförmiger Querschnitt, wobei jedoch die Austrittsfläche nicht gerade ausgebildet ist, sondern einen Knick aufweist. Die obere Seitenfläche 84' wie auch die untere Seitenfläche 84" sind für die relevanten Strahlen 7 totalreflektierend ausgebildet, so dass die durch die Eintrittsfläche 82 eintretenden Strahlen 7 auch wieder an der Austrittsfläche 83 austreten. Die Austrittsfläche 83 ist so geformt, dass die Strahlen 7 auf die Photodiode 5 gelangen.

Die Neigung der oberen Seitenfläche 84' bestimmt die Ausrichtung des Maximums und den oberen Empfangsbereich bezüglich des Einfallswinkels 3. Je steiler diese obere Seitenfläche 84' ist, das bedeutet in Richtung des Winkels θ = 90° ausgerichtet, desto höher liegt das Maximum und desto empfindlicher ist der Sensor 4 im Bereich um den Winkel θ = 90°. Die Neigung der unteren Seitenflächen 84" bestimmt die Empfindlichkeit im Bereich des Einfallswinkels 3 von θ = 0° bis θ = 45°. Je steiler die untere Seitenfläche 84" ist, desto weniger "sieht" die Photodiode 5, respektive der gesamte Sensor 4, nach vorne, also zu kleinen Einfallswinkeln 3 hin. Dies bedeutet aber gleichzeitig, dass er mehr Strahlen 7 im Bereich um einen Einfallswinkel 3 von θ = 90° herum empfängt.

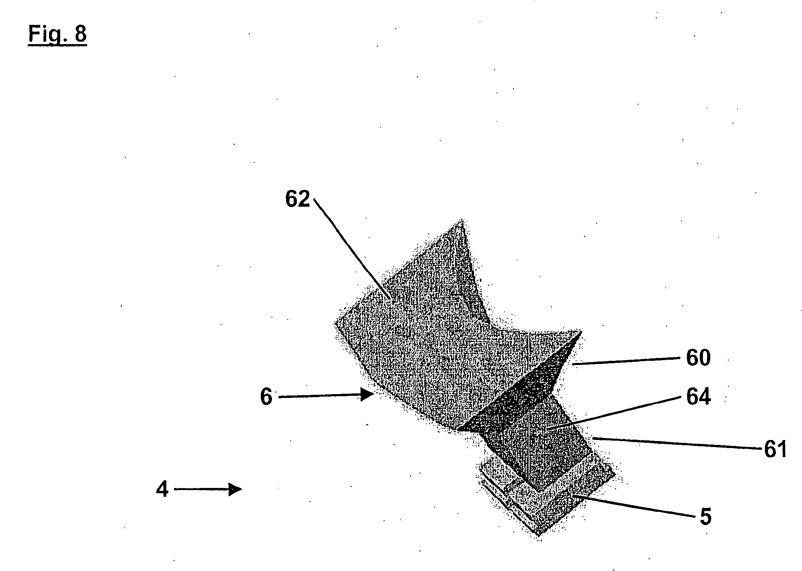

In Fig. 8 ist eine dreidimensionale Darstellung eines erfindungsgemäßen Sensors 4 nach dem ersten Ausführungsbeispiel der Figuren 2 bis 4 dargestellt. Hierin ist die räumliche Anordnung der Lichtleitvorrichtung 6 im Zusammenhang mit den Photodioden 5 zu erkennen. Die plane Eintrittsfläche 62 ermöglicht dabei ein direktes Anbringen an der Windschutzscheibe eines Fahrzeugs. Die geschwungenen Flächen sind so ausgewählt, dass ein vorher festgelegter Verlauf der Empfangscharakteristik und der Empfindlichkeit sowie der Maxima für die gesamte dreidimensionale Möglichkeit der Detektion des Standes der Sonne erreicht wird und auf den speziellen Fahrzeugtyp zugeschnitten werden kann, in dem der Sensor verwendet wird.

In den Querschnitten sind die Lichtleitvorrichtungen 6, 8 spiegelsymmetrisch zur Mittellängsachse 65; 87 ausgebildet. Dadurch ergibt sich für die Empfangscharakteristik und die Empfindlichkeit des gesamten Sensors 4 eine symmetrische Ausgestaltung bezüglich des Sonnenverlaufs 2.

Zusammenfassend kann festgehalten werden, dass ein erfindungsgemäßer Sensor 4, egal ob er nach dem ersten Ausführungsbeispiel einer Lichtleitvorrichtung 6 oder nach dem zweiten Ausführungsbeispiel einer Lichtleitvorrichtung 8 ausgebildet ist, direkt an eine Windschutzscheibe angebracht werden kann und somit unter anderem auch in daran bereits angebrachte andere Sensoren, wie beispielsweise einen Regenlichtsensor, integriert werden kann. Dadurch entfällt unter anderem die zusätzliche Verkabelung, der Aufwand zur Installierung des zusätzlichen Sensors und es entstehen geringere Kosten als bei der Verwendung von mehreren Einzelsensoren. Darüber hinaus kann die Eintrittsfläche 62; 82 auch konkav oder konvex ausgebildet sein, wobei sie dann einen großen Radius aufweist, damit sie noch gut an der Windschutzscheibe angebracht werden kann.

Neben den beschriebenen Dualsensoren mit zwei Photodioden ist die Erfindung auch dazu geeignet, nur eine Photodiode in einem Monosensor zu verwenden. Hierfür wird die Breite der Lichtleitvorrichtung 6 des ersten Ausführungsbeispiels in Fig. 2 soweit verkleinert, dass nur eine Photodiode die gesamten aus der Austrittsfläche austretenden Strahlen 7 detektiert. Ein weitere Möglichkeit besteht darin, dass die breite der Lichtleitvorrichtung 6 des ersten Ausführungsbeispiels unverändert bleibt, aber trotzdem nur eine Photodiode zentral hinter der Austrittsfläche angeordnet wird. Solche Monosensoren sind einfacher herzustellen, aber können keine Unterscheidung der einfallenden Strahlungsleistung der Sonne bezüglich des Fahrers und des Beifahrers bringen.

### Bezugszeichenliste

- 1: Fahrzeug
- 2: Sonnenverlauf
- 3: Einfallswinkel
- 4: Sensor
- 5: Photodiode
- 6: Lichtleitvorrichtung
- 7: Strahlen
- 8: Lichtleitvorrichtung
- 60: Sonnennaher erster Bereich
- 61: Sonnenferner zweiter Bereich
- 62: Eintrittsfläche
- 63: Austrittsfläche
- 64: Seitenfläche
- 64': obere Seitenfläche
- 64": untere Seitenfläche
- 65: Mittellängsachse
- 80: Sonnennaher erster Bereich
- 81: Sonnenferner zweiter Bereich
- 82: Eintrittsfläche
- 83: Austrittsfläche
- 84: Seitenfläche
- 84': obere Seitenfläche
- 84": untere Seitenfläche
- 85: Mittelausnehmung
- 86: Seitenfläche
- 87: Mittellängsachse

## Patentansprüche

1. Sensor (4) zur Erfassung der Position der Sonne in Bezug auf ein Kraftfahrzeug mit einer Lichtleitvorrichtung (6; 8) mit mindestens einem Photodetektor (5), wobei die Lichtleitvorrichtung (6; 8) ein trichterförmiger Lichtleiter mit einer sonnennahen Eintrittsfläche (62; 82) und einer sonnenfernen Austrittsfläche (63; 83) ist und die direkten Strahlen der Sonne, die in den Lichtleiter durch die Eintrittsfläche (62; 82) eintreten, an den Seitenflächen (64, 64', 64"; 84, 84', 84", 86) des Lichtleiters total reflektiert werden, **dadurch gekennzeichnet, dass** die Eintrittsfläche (62; 82) der Lichtleitvorrichtung (6; 8) im Wesentlichen plan ausgebildet ist.

2. Sensor (4) nach Anspruch 1, **dadurch gekennzeichnet, dass** Querschnitte der Lichtleitvorrichtung (6; 8) in einem sonnennahen ersten Bereich (60; 80) trapezförmig und in einem zweiten schmaleren Bereich (61; 81) im Wesentlichen rechteckig sind.

3. Sensor (4) nach Anspruch 1 oder 2, **dadurch gekennzeichnet, dass** die Lichtleitvorrichtung (6; 8) in ihrem sonnenfernen Bereich (61; 81) eine Mittelausnehmung aufweist.

4. Sensor (4) nach einem der vorstehenden Ansprüche, **dadurch gekennzeichnet, dass** die Seitenflächen (64; 84, 86) in jedem Querschnitt symmetrisch zur Mittellängsachse (65; 87) der Lichtleitvorrichtung (6; 8) angeordnet sind.

5. Sensor (4) nach einem der vorstehenden Ansprüche, **dadurch gekennzeichnet, dass** zwei Photodetektoren (5) im Querschnitt nebeneinander angeordnet sind.

6. Sensor (4) nach einem der vorstehenden Ansprüche, **dadurch gekennzeichnet, dass** Längsschnitte der Lichtleitvorrichtung (6; 8) im Wesentlichen trapezförmig ausgebildet sind.

7. Sensor (4) nach einem der Ansprüche 1 bis 5, **dadurch gekennzeichnet, dass** die Längsschnitte der Lichtleitvorrichtung (6; 8) in dem sonnennahen ersten Bereich (60; 80) trapezförmig und in dem sonnenfernen zweiten Bereich (61; 81) im Wesentlichen rechteckig ausgebildet sind.

8. Sensor (4) nach einem der vorstehenden Ansprüche, **dadurch gekennzeichnet, dass** die Austrittsfläche (63; 83) nicht plan ist.

9. Sensor (4) nach einem der vorstehenden Ansprüche, **dadurch gekennzeichnet, dass** er mit einem regen- und/oder lichtdetektierenden Sensor in einem einzigen Kombinationssensor räumlich integriert ist.

10. Sensor (4) nach einem der vorstehenden Ansprüche, **dadurch gekennzeichnet, dass** die Seitenflächen (64, 64"; 84, 84", 86) zumindest im sonnenfernen zweiten Bereich (61; 81) verspiegelt sind.

## Claims

1. Sensor (4) for detecting the relative position between the sun and a motor vehicle, comprising a light guide apparatus (6; 8) with at least one photo detector (5), where the light guide apparatus (6; 8) is a funnel-shaped light guide with a surface of incidence (62; 82) facing towards the sun and a surface of emergence (63; 83) facing away from the sun and where the direct sunlight entering the light guide through the surface of incidence (62; 82) is completely reflected by the lateral faces (64, 64', 64"; 84, 84', 84", 86) of the light guide, **characterized by** the surface of incidence (62; 82) of the light guide apparatus (6; 8) being a mainly plane surface.

2. Sensor (4) of claim 1, **characterized in that** the cross-section of the light guide apparatus (6; 8) is trapezoidal in a first area facing the sun (60; 80) and mainly rectangular in a second and narrower area (61; 81).

3. Sensor (4) of claim 1 or 2, **characterized in that** the light guide apparatus (6; 8) has a recess at the center of its surface facing away from the sun (61; 81).

4. Sensor (4) of one of the above claims, **characterized in that** every cross-section through the lateral faces (64; 84, 86) and the central longitudinal axis (65; 87) of the light guide apparatus (6; 8) are symmetrical.

5. Sensor (4) of one of the above claims, **characterized in that** two photo detectors (5) are located next to each other on the cross-section.

6. Sensor (4) of one of the above claims, **characterized in that** longitudinal sections through the light guide apparatus (6; 8) are more or less of a trapezoid shape.

7. Sensor (4) of claim 1 to 5, **characterized in that** the longitudinal sections through the light guide apparatus (6; 8) are trapezoidal in the first area facing the sun (60; 80) and mainly rectangular in the second area (61; 81) that faces away from the sun.

8. Sensor (4) of one of the above claims, **characterized in that** the surface of emergence (63; 83) is not plane.

9. Sensor (4) of one of the above claims, **characterized in that** it resides in a combination sensor together with a sensor designed to detect rain and/or light.

10. Sensor (4) of one of the above claims, **characterized in that** the lateral faces (64, 64"; 84, 84", 86) are metal-coated at least in a second area (61; 81) that is facing away from the sun.

## Revendications

1. Capteur (4) permettant l'enregistrement de la position du soleil par rapport à un véhicule automobile avec un dispositif de guidage de lumière (6 ; 8) avec au moins un photodétecteur (5), le dispositif de guidage de lumière (6 ; 8) étant un guide de lumière en forme d'entonnoir avec une surface d'entrée (62 ; 82) proche du soleil et une surface de sortie (63 ; 83) éloignée du soleil et les rayons directs du soleil, qui pénètrent dans le guide de lumière par la surface d'entrée (62 ; 82), étant totalement réfléchies sur les surfaces latérales (64, 64', 64" ; 84, 84', 84", 86) du guide de lumière, **caractérisé en ce que** la surface d'entrée (62 : 82) du dispositif de guidage de lumière (6 ; 8) est conçue de façon sensiblement plane.

2. Capteur (4) selon la revendication 1, **caractérisé en ce que** des sections du dispositif de guidage de lumière (6 ; 8) sont trapézoïdales dans une première zone (60 ; 80) proche du soleil et sensiblement rectangulaires dans une deuxième zone (61 ; 81) plus étroite.

3. Capteur (4) selon la revendication 1 ou 2, **caractérisé en ce que** le dispositif de guidage de lumière (6 ; 8) présente un évidement central dans sa zone (61 ; 81) éloignée du soleil.

4. Capteur (4) selon l'une des revendications précédentes, **caractérisé en ce que** les surfaces latérales (64 ; 84, 86) sont, dans chaque section transversale, disposées de façon symétrique par rapport à l'axe longitudinal médian (65 ; 87) du dispositif de guidage de lumière (6 ; 8).

5. Capteur (4) selon l'une des revendications précédentes, **caractérisé en ce que** deux photodétecteurs (5) sont disposés dans l'un à côté de l'autre dans la section transversale.

6. Capteur (4) selon l'une des revendications précédentes, **caractérisé en ce que** des sections longitudinales du dispositif de guidage de lumière (6 ; 8) sont conçues sensiblement en forme trapézoïdale.

7. Capteur (4) selon l'une des revendications 1 à 5, **caractérisé en ce que** les sections longitudinales du dispositif de guidage de lumière (6; 8) sont de forme trapézoïdale dans la première zone (60 ; 80) proche du soleil et de forme sensiblement rectangulaire dans la deuxième zone (61 ; 81) éloignée du soleil.

8. Capteur (4) selon l'une des revendications précédentes, **caractérisé en ce que** la surface de sortie (63 ; 83) n'est pas plane.

9. Capteur (4) selon l'une des revendications précédentes, **caractérisé en ce qu'**il est intégré physiquement dans un capteur combiné unique, en association avec un capteur de détection de pluie et/ou de lumière.

10. Capteur (4) selon l'une des revendications précédentes, **caractérisé en ce que** les surfaces latérales (64, 64" ; 84, 84", 86) sont métallisées au moins dans la deuxième zone (61 ; 81) éloignée du soleil.
